(19)

**Europäisches Patentamt**

**European Patent Office**

**Office européen des brevets**

(11) **EP 3 640 280 A1**

(12) **EUROPÄISCHE PATENTANMELDUNG**

(43) Veröffentlichungstag:
**22.04.2020 Patentblatt 2020/17**

(21) Anmeldenummer: **18201485.2**

(22) Anmeldetag: **19.10.2018**

(51) Int Cl.:
*C08G 69/14* (2006.01)    *C08G 69/26* (2006.01)
*C08G 69/40* (2006.01)    *B32B 1/08* (2006.01)
*B60K 15/00* (2006.01)    *F02M 37/00* (2006.01)
*C08K 3/04* (2006.01)    *C08L 77/02* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Evonik Operations GmbH**
**45128 Essen (DE)**

(72) Erfinder:
• **WEISS, Dr. Christine**
**46282 Dorsten (DE)**
• **FARGES, Olivier**
**45768 Marl (DE)**

• **BAUMANN, Dr. Franz-Erich**
**48249 Dülmen (DE)**
• **GAHLMANN, Klaus**
**45770 Marl (DE)**
• **BÖER, Michael**
**59399 Olfen (DE)**
• **SZENTIVANYI, Dr. Andreas**
**45134 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(54) **LEITFÄHIGE FORMMASSEN**

(57) Die Erfindung ist auf teilkristalline Polyamidkomponenten als Bestandteil von Formmassen gerichtet, wobei die Polyamidkomponente keinen Kristallitschmelzpunkt ($T_m$) unter 50°C aufweist.

EP 3 640 280 A1

**Beschreibung**

Die Erfindung ist auf teilkristalline Polyamidkomponenten als Bestandteil von Formmassen gerichtet, wobei die Polyamidkomponente keinen Kristallitschmelzpunkt ($T_m$) unter 50°C aufweist.

Flexible Rohre, die zur Führung flüssiger oder gasförmiger Medien in Kraftfahrzeugen eingesetzt werden, sind gut bekannt. Früher wurde diese Aufgabe zufriedenstellend über Monorohre aus Polyamid oder anderen thermoplastischen Formmassen gelöst. Bei diesen Monorohren erwies es sich, dass die nach Einbau vorliegenden mechanischen Eigenschaften wie hohe Reißdehnung und hohe Schlagzähigkeit auch über die Lebensdauer des Kraftfahrzeugs hinweg durch Kälte- oder Hitzeeinwirkung oder durch Medienkontakt nicht so stark verändert werden, dass dies zu einem Ausfall der Leitung führt.

Strengere Umweltvorschriften haben dazu geführt, dass von der weiteren Entwicklung und dem Einsatz von Monorohren für den Einsatz als Kraftstoffleitung sowie von einschichtigen Kraftstoffbehältern Abstand genommen wurde. Bei beiden wird von der Automobilindustrie neben einer ausreichenden Kraftstoffbeständigkeit auch eine verbesserte Sperrwirkung gegenüber den Kraftstoffkomponenten verlangt, um deren Emissionen zu reduzieren. Dies hat zur Entwicklung von mehrschichtigen Hohlkörpern geführt, bei denen ein Sperrschichtwerkstoff zum Einsatz kommt. Derartige Mehrschichtverbunde, die neben einer Barriere-Schicht weitere Schichten auf Basis aliphatischer Polyamide enthalten, sind beispielsweise aus der EP 1216826 A2 bekannt.

Polyamide kommen wegen ihrer guten mechanischen Eigenschaften, ihres geringen Wasseraufnahmevermögens und ihrer Unempfindlichkeit gegenüber Umwelteinflüssen als Material sowohl für die Innenschicht als auch für die Außenschicht in Frage. Haftung zwischen aneinander grenzenden Schichten ist wünschenswert und kann bei Zwischenschaltung einer Haftvermittlerschicht gewährleistet werden. In der Automobilindustrie besteht seit einiger Zeit darüber hinaus ein Trend zu höheren Temperaturen im Motorraum und somit die Forderung nach einer Beständigkeit der eingesetzten Hohlkörper bei diesen Temperaturen. Lösungen, die eine Haftvermittlerschicht auf Basis z.B. von Polyolefinen beinhalten, sind wegen deren niedriger Wärmeformbeständigkeit nicht geeignet. In der EP1216826A2 wird dieses Problem gelöst durch Verwendung einer haftvermittelnden Schicht enthaltend ein Polyamid ausgewählt aus PA6, PA66 und PA6/66, gegebenenfalls ein Polyamin-Polyamid-Copolymer sowie ein Polyamid ausgewählt aus PA11, PA12, PA612, PA1012 und PA1212.

Der fortschreitende Trend des "Downsizing", also der Verkleinerung technischer Größen bei Erhaltung der gleichen Leistungsfähigkeit mit Ziel der Senkung des Energiverbrauchs von z.B. Fahrzeugmotoren führt neben der Erhöhung der herschenden Temperaturen im Motorraum auch zu einer Verkleinerung der Einspritzventile. Diese Ventile sind Düsen, die an einem Verbrennungsmotor Kraftstoff in den Ansaugtrakt oder den Verbrennungsraum einspritzen. Polare Bestandteile, die in Kraftstoffen enthalten sind, erfordern, dass das eingesetzte Mehrschichtrohr gegen Extraktion von Bestandteilen aus den eingesetzten Materialien resistent ist. US 6467508 beschreibt das Ausfallen solcher Extrakte im Kraftstoff und das mögliche Verstopfen der Einspritzventile als Problem. Gelöst wird dieses Problem durch den Einsatz eines wenig Ausfällungen bildenden Polyamids ("low precipitate polyamide") in der Innenschicht. Das "low precipitate polyamide" ist gewaschenes Polyamid, welches durch aufwendige und kostspielige vorherige Extraktion mit Methanol erhalten wird. Auf diese Weise werden störende Bestandteile wie beispielsweise Oligomere entfernt.

Nach der fortschreitenden Verkleinerung der Einspritzdüsen fordert die Automobilindustrie neben der Reduzierung der im Kraftstoff ausfallenden Extrakte auch eine Reduzierung der im Kraftstoff löslichen Extrakte. Wegen der Einführung von Hybridfahrzeugen hat sich diese Forderung verstärkt, da bei diesen Fahrzeugen über längere Zeit der Verbrennungsmotor nicht genutzt wird. Auch lösliche Extrakte im Kraftstoff können somit über Eintrocknen zur Verstopfung von Einspritzdüsen führen. Extrakte sind neben den, in der US 6467508 beschriebenen, Oligomeren auch Additive wie beispielsweise Weichmacher und Stabilisatoren der eingesetzten Formmassen.

Sowohl bei der DE 3 724 997 C2 und der DE 2 716 004 C3 als auch der EP 0 566 755 B1 werden Polyetherblockamide mit Laurinlactam als Monomer für den Polyamidblock verwendet. Entsprechende modifizierte Mischungen mit Polyamid 12 werden auch im Polyamid-Kunststoffhandbuch, 3/4, 1998, Carl Hanser Verlag, auf der Seite 872, Absatz 8.3.3 erwähnt. Diese Blends zeigen eine Teilverträglichkeit, welche auf der Cokristallisation der Polyamid 12-Blöcke mit dem Homopolyamid beruht.

Die EP1884356 offenbart Blends aus Polyamid/ Polyamid-Elastomen (TPE-A), auch der Zusatz von Leitfähigkeitszusätzen ist in einer Liste von möglichen Additiven genannt. Die offenbarten Blends enthalten sowohl große Mengen an Polyetheramiden, als auch große Mengen an Schlagzähmodifikatoren auf Basis von Polyolefinen.

Die Herstellung von Polyetheramiden wird zum Beispiel in der EP0459862B1 und der CH642982 beschrieben. Dabei werden die Polyetheramide ausgehend von Polyamidsequenzen, die Carboxylgruppen an beiden Kettenenden aufweisen, mit Polyoxyalkylensequenzen, die Aminogruppen an beiden Kettenenden aufweisen, hergestellt.

In WO 2017/121961 A1 und WO 2017/121962 A1 werden Mehrschichtrohre beansprucht, deren innere Schichten mindestens drei verschiedene Polyamide mit unterschiedlichen Kettenlängen aufweisen. Diese Schichten können auch Polyetherblockamide aufweisen, sie können auch leitfähig sein.

Typische Thermoplaste weisen spezifische Oberflächenwiderstände im Bereich von $10^{16}$ bis $10^{14}$ Ohm($\Omega$) auf

und können daher Spannungen von bis zu 15.000 Volt aufbauen. Wirksame Antistatika können die spezifischen Oberflächenwiderstände der Kunststoffe auf $10^{10}$ bis $10^9$ Ohm abbauen. Ein deutlich höheres Niveau für die Ableitung von elektrischen Ladungen muss hingegen erzielt werden, wenn Kunststoffe in elektronischen Bauteilen von Großgeräten wie z.B. im Trafo- oder Elektroschrankherstellerbereich eingesetzt werden sollen oder in einer Vielzahl von Anwendungen im Automobil- und Flugzeugbau. Hier müssen elektrisch leitfähige Formmassen eingesetzt werden, die einen spezifischen Oberflächenwiderstand von weniger als $10^9$ Ohm aufweisen müssen. Entscheidend ist darüber hinaus, dass in derartigen Kunststoffanwendungen nicht nur der Oberflächenwiderstand, sondern auch der Durchgangswiderstand durch Kunststoffteile mit einer Dicke bis zu mehreren Millimeter in einem ebensolchen Bereich liegen muss und sich bei Teilen, die mittels Spritzguss hergestellt werden, häufig Anisotropieeffekte ausbilden, die generell schwierig zu unterbinden sind.

Für die Fertigung von leitfähigen Kunststoffformteilen gibt es daher nur die Möglichkeit, entweder bereits leitfähige Kunststoffe wie Polyaniline u. ä. zu verwenden oder die zuvor genannten und als elektrische Isolatoren zu charakterisierenden Kunststoffe durch die Verwendung von Rußen, insbesondere Leitfähigkeitsrußen, Kohlenstofffasern, Graphit, Graphen und/oder Carbon Nanotubes (CNT) leitfähig zu machen.

Carbon Nanotubes sind neben Graphit, Diamant, amorphem Kohlenstoff und Fullerenen eine weitere Modifikation des Elements Kohlenstoff. Die Kohlenstoffatome sind dabei in Sechsecken angeordnet. Die Struktur entspricht einer aufgerollten einatomigen oder mehratomigen Schicht von Graphit, so dass ein Hohlzylinder mit typischerweise wenigen Nanometern Durchmessern und bis zu einigen Millimetern Länge entsteht. Man unterscheidet grundsätzlich mehrwandige und einwandige Kohlenstoff-Nanoröhren, in der Literatur meist auch MWNTs und SWNTs (aus dem Englischen: multi walled nanotubes und single walled nanotubes) abgekürzt. Kohlenstoff-Nanoröhren zeigen aufgrund von Van-der-Waals-Kräften eine starke Tendenz, sich zu Bündeln zu vereinigen, weshalb die Entknäuelung/Dispergierung ohne starkes Verkürzen durch starke Scherkräfte im Extrusionsprozess essentiell ist. Typische Handelsprodukte sind von verschiedenen Herstellern erhältlich, wovon hier stellvertretend die Firmen Bayer, Cyclics (früher Electrovac), Nanocyl und Arkema mit ihren Grades Baytubes® C150P (Warenzeichen Bayer AG, Deutschland), Baytubes C 150 HP, Baytubes C 70P, Electrovac HTF 110 FF, Nanocyl® NC 7000 (Warenzeichen Nanocyl SA, Belgien) und Graphistrength C100 genannt werden sollen. Weitere Hersteller bieten CNTs in Form von Masterbatches an, beispielsweise Hyperion und C-Polymers.

Demzufolge besteht die Aufgabe der Erfindung darin, leitfähige Formmassen bereitzustellen, welche zur Verbesserung der mechanischen Eigenschaften und der Verbesserung der Alterungsbeständigkeit keine niedermolekularen Weichmacher oder andere extrahierbare Substanzen benötigen.

Diese Aufgabe wird durch teilkristalline Polyamidkomponenten als Bestandteil von Formmassen gelöst, wobei die Polyamidkomponente keinen Kristallitschmelzpunkt ($T_m$) unter 50°C aufweist wie im Folgenden und in den Ansprüchen näher beschrieben.

Gegenstand der Erfindung ist eine Formmasse, die zu mindestens 50 Gew.-%, bevorzugt 60 Gew.-%, mehr bevorzugt 70 Gew.-%, besonders bevorzugt 80 Gew.-% und zu insbesondere bevorzugt mindestens 90 Gew.-% eine teilkristalline Polyamidkomponente enthält und die Formmasse einen Füllstoff enthält, der der Formmasse Leitfähigkeit verleiht, dadurch charakterisiert, dass die Formmasse keinen Kristallitschmelzpunkt unter 50°C aufweist, wobei die Polyamidkomponente die Komponenten A und B enthält,

A PA Homopolymer des Typs PA X.Y oder PA Z , wobei X für einen Diaminrest (DA), Y für einen Dicarboxylrest (DC), und Z für einen alpha-omega-Aminosäurerest steht;
B PA Copolymer, des Typs PA X'.Y' wobei X' für einen Diaminrest (DA') und Y' für einen Dicarboxylrest (DC') steht; wobei ein Teil der Diaminreste (DA') durch einen Polyether ersetzt ist, der mindestens zwei Aminotermini oder mindestens zwei Hydroxytermini aufweist;

wobei der Anteil Polyether an der Summe der Komponenten A und B zwischen 0,5 bis 15 Gew.-% beträgt, wobei das PA Homopolymer bis zu 10 mol% aus anderen amidbildenden Bausteinen gebildet werden kann, wobei bis zu 10 mol% der Diaminreste (DA') durch einen Polyether ersetzt sein können, der nur einen Aminoterminus oder der nur einen Hydroxyterminus aufweist.

Ein weiterer Gegenstand der Erfindung ist die Verwendung der erfindungsgemäßen Formmasse zur Herstellung von Hohlprofilen.

Ein weiterer Gegenstand der Erfindung sind ein- oder mehrschichtige Hohlprofile, die mindestens eine Schicht aufweisen, die aus der erfindungsgemäßen Formmasse besteht.

Die erfindungsgemäßen Formmassen und Formkörper (wie Hohlprofile), enthaltend die erfindungsgemäßen Formmassen, sowie die erfindungsgemäße Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Im Schutzumfang liegen im kommerziellen Handeln übliche Konfektionierungen und Abpackungen der erfindungsgemäßen Produkte sowohl als solche, als auch in eventuellen Zerkleinerungsformen soweit diese nicht in den Ansprüchen definiert sind.

Die verschiedenen Einheiten des Polyethers sind statistisch verteilt. Statistische Verteilungen sind blockweise aufgebaut mit einer beliebigen Anzahl an Blöcken und einer beliebigen Sequenz oder sie unterliegen einer randomisierten Verteilung, sie können auch alternierend aufgebaut sein oder auch über die Polymerkette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Ein Vorteil der erfindungsgemäßen Formmassen ist, dass ein ein- oder mehrschichtiger Hohlkörper, dessen Innenschicht aus der erfindungsgemäßen Formmasse gebildet wird, eine hohe Auswaschbeständigkeit aufweist. Eine Prüfung mit einem Testkraftstoff gemäß ASTM D471-15, "Reference Fuel I" an einem Rohr wie in den Beispielen beschrieben zeigt dies. Der Testkraftstoff zeichnet sich dadurch aus, dass er 15 Vol.-% Methanol enthält. Im Stand der Technik mögen weitere Bestimmungsmethoden zur Auswaschbeständigkeit bekannt sein, die erfindungsgemäß bevorzugte Methode ist in den Beispielen detailliert aufgeführt. Es können hierbei lösliche Anteile wie auch unlösliche Anteile extrahiert werden. Bevorzugt werden aus dem Testkörper weniger als 6 g pro Quadratmeter Innenfläche des Testkörpers an löslichen Anteilen extrahiert, bevorzugt weniger als 5,5 g/ m$^2$.

Ein weiterer Vorteil der erfindungsgemäßen Formmassen ist, dass der Kristallinitätsgrad der Polyamidkomponente bestehend aus Komponenten A, B und C, niedriger ist, als der Kristallinitätsgrad einer Mischung, die die gleichen Komponenten A und C in gleichen Mengen aufweist.

Ein Vorteil der erfindungsgemäßen mehrschichtigen Hohlkörper, deren Innenschicht aus der erfindungsgemäßen Formmasse gebildet ist und die eine Sperrschicht aufweisen, ist die geringe Kraftstoffdurchlässigkeit. Eine Prüfung mit einem Testkraftstoff gemäß ASTM D471 - 15, "Reference Fuel I" an einem Rohr wie in den Beispielen beschrieben zeigt dies. Der Testkraftstoff zeichnet sich dadurch aus, dass er 15 Vol.-% Methanol enthält. Im Stand der Technik mögen weitere Bestimmungsmethoden zur Auswaschbeständigkeit bekannt sein, die erfindungsgemäß bevorzugte Methode ist in den Beispielen detailliert aufgeführt.

Bevorzugt diffundieren maximal 6 g/m$^2$ im Testzeitrum von einem Tag bei Lagerung bei 60°C aus dem Testkörper heraus, bevorzugt weniger als 5,5 g/m$^2$, mehr bevorzugt weniger als 5,0 g/m$^2$ und besonders bevorzugt weniger als 4,5 g/m$^2$.

Amidbildende Bausteine sind alpha-omega-Aminosäurereste oder die Kombination aus Diaminresten mit Dicarboxylresten. Bevorzugte alpha-omega-Aminosäurereste sind freie Aminosäuren oder deren Lactame, mehr bevorzugt epsilon-Caprolatam, 11-Amino-undecansäure, 12-Amino-laurylsäure oder das entsprechende Lauryllactam.

Diaminreste sind Reste die einen Kohlenwasserstoff aufweisen, welcher terminal je eine Aminogruppe trägt, wobei die Aminogruppe den Terminus des Polymers bilden kann, im Regelfall aber mit einer Valenz zur Kettenbildung beiträgt.

Bevorzugte Kohlenwasserstoffe sind aliphatisch, mehr bevorzugt mit 2 bis 18 Kohlenstoffatomen, besonders bevorzugt 3 bis 14 Kohlenstoffatomen, insbesondere bevorzugt 4 bis 12 Kohlenstoffatomen. Weisen die Kohlenwasserstoffe mehr als 3 Kohlenstoffatome auf, so sind diese linear, verzweigt oder cyclisch, bevorzugt linear, mehr bevorzugt bis zu einer Anzahl von 6 Kohlenstoffatomen linear.

Besonders bevorzugte Diaminreste sind Ethylendiamin, 1,4-Diaminobutan, 1,6-Diaminohexan, 1, 10-Diaminodecan, 1, 12-Diaminododecan; insbesondere bevorzugt 1,6-Diaminohexan.

Dicarboxylreste (DC) sind Reste, die einen Kohlenwasserstoff aufweisen, welcher terminal je eine Carboxylgruppe trägt, wobei die Carboxylgruppe den Terminus des Polymers bilden kann, im Regelfall aber als Carbonylgruppe mit einer Valenz zur Kettenbildung beiträgt.

Bevorzugte Kohlenwasserstoffe sind aliphatisch, mehr bevorzugt mit 3 bis 18 Kohlenstoffatomen, besonders bevorzugt mit 6 bis 14 Kohlenstoffatomen, insbesondere bevorzugt mit 8 bis 12 Kohlenstoffatomen. Weiter bevorzugt sind die Kohlenwasserstoffe linear, verzweigt oder cyclisch, mehr bevorzugt linear.

Bevorzugte Dicarboxylreste sind Reste der Bernstein-, Glutar-, Adipin-, Pimelin-, Kork-, Azelain-, Sebacin-, Dodecandisäure, insbesondere bevorzugt der Dodecandisäure.

Das PA Homopolymer weist Polyamide (PA) für die Komponente A auf, bevorzugte Polyamide sind PA 6, PA 11, PA 12, PA 4.6, PA 6.6, PA 6.9, PA 6.10, PA 6.12, PA 9.10, PA 9.12, PA 10.10, PA 10.12, PA 12.12; mehr bevorzugt PA 6.6, PA 6.10, PA 6.12, PA 10.10; besonders bevorzugt PA 6.10, PA 6.12, PA 10.10 und insbesondere bevorzugt PA 6.12.

Das PA-Copolymer der Komponente B weist bevorzugt einen Polyetheranteil von 8 bis 30 Gew.-% auf, mehr bevorzugt von 9 bis 25 Gew.-%, besonders bevorzugt 10 bis 20 Gew.-%, insbesondere bevorzugt 12 bis 18 Gew.-% bezogen auf die Gesamtmasse des PA-Copolymers.

Der Polyether weist bevorzugt mindestens 3 bis zu 50 Wiederholungseinheiten auf, mehr bevorzugt 4 bis 40, besonders bevorzugt 5 bis 30, insbesondere bevorzugt 6 bis 20, wobei die Wiederholungseinheiten durch Sauerstoffatome miteinander verbunden sind.

Bevorzugt ist der Polyether frei von Stickstoffatomen, welche keine Wasserstoffatome aufweisen, weiterhin bevorzugt in der Polymerkette frei von Aminogruppen der Formel -NH-, =NH ist.

Mehr bevorzugt weist der Polyether ausschließlich Alkylenoxy-Bausteine auf, bevorzugt falls Alkylenoxy-Bausteine mit 3 bis 18 Kohlenstoffatomen vorliegen, weist der Polyether eine Taktizität auf, z.B. isotaktisch, syndiotaktisch, heterotaktisch, hemiisotaktisch, ataktisch.

Besonders bevorzugte Polyether bestehen aus Ethylenoxy-, Propylenoxy- und Butylenoxy-Bausteinen oder Mischungen hieraus, wobei die Mischungen statistisch sind. Insbesondere bevorzugte Polyether bestehen aus Ethylenoxy- und Propylenoxy-Bausteinen, oder bestehen aus n-Butylenoxy-Bausteinen, oder bestehen aus Propylenoxy-Bausteinen.

Der Polyether weist bevorzugt ein zahlenmittleres Molekulargewicht $M_n$ von maximal 5000 g/mol auf, besonders bevorzugt von maximal 2000 g/mol und insbesondere bevorzugt von maximal 1000 g/mol, wobei die untere Grenze bei mindestens 200 g/mol, bevorzugt 300 g/mol, mehr bevorzugt 400 g/mol liegt.

Der Polyether weist bevorzugt nicht mehr als zwei Aminotermini oder zwei Hydroxytermini auf, mehr bevorzugt genau zwei Aminotermini oder zwei Hydroxytermini.

Die Polyamidkomponente der erfindungsgemäßen Formmassen weist bevorzugt einen Polyetheranteil von 1 bis 12 Gew.-%, bevorzugt 1,5 bis 9 Gew.-%, besonders bevorzugt 2,0 bis 8 Gew.-%, insbesondere bevorzugt 2,5 bis 7 Gew.-% bezogen auf die Gesamtmasse der Komponenten A und B auf.

Die Kettenlängen des PA Copolymers und des PA Homopolymers der Polyamidkomponente weichen bevorzugt im Durchschnitt um nicht mehr als 10% in Bezug auf die Kohlenstoffatomzahl der amidbildenden Bausteinen voneinander ab, wobei die Abweichung auf den höheren Wert der Kettenlängen bezogen wird. Bei Verwendung eines PA Copolymers PA 10.12 und dem PA Homopolymer z.B. ein PA 10.10 beträgt der Durchschnitt des PA 10.12 gleich 11 und die Abweichung beträgt damit 9,1 %.

Weiterhin bevorzugt weisen die erfindungsgemäßen Formmassen einen Anteil an Füllstoff zur Erhöhung der Leitfähigkeit (Komponente C) von 1 bis 10 Gew.-%, bevorzugt 1,5 bis 8 Gew.-%, besonders bevorzugt 2 bis 6 Gew.-%, insbesondere bevorzugt 2,5 bis 4 Gew.-% bezogen auf die Gesamtmasse der Polyamidkomponente und des Füllstoffes zur Erhöhung der Leitfähigkeit auf, also der Summe der Komponenten A, B und C.

Bevorzugte Füllstoffe zur Erhöhung der Leitfähigkeit bilden keine Aggregate, sie sind damit unter Eintrag von Scherkräften dispergierbar.

Weiterhin bevorzugt weisen die erfindungsgemäßen Formmassen einen Kristallinitätsgrad auf, der niedriger ist, als der Kristallinitätsgrad einer Mischung, die die gleichen Komponenten A und C (Füllstoff zur Erhöhung der Leitfähigkeit) in gleichen Mengen aufweist, wobei eventuelle weitere Bestandteile der Formmasse ebenfalls identisch in Identität und Menge sind.

Der Kristallinitätsgrad wird nach den Methoden des Standes der Technik bestimmt, bevorzugt wird der Kristallinitätsgrad mit Gleichung (1) berechnet

$$X_C = \frac{\Delta H_m}{\Delta H_m^0} \qquad\qquad (G1)$$

Die Größen $T_m$, $T_g$ und $\Delta H_m$ werden im Umfang der vorliegenden Erfindung mit Hilfe der DSC bestimmt, bevorzugt nach EN ISO 11354-1:2016D bestimmt, mehr bevorzugt wie in den Beispielen beschrieben.

Die Werte $\Delta H_m^0$ zur Berechnung der Kristallinitätsgrad Xc werden Tabellenwerken entnommen, z.B. van Krevelen "Properties of Polymers", 4 Ausgabe, 2009. Bevorzugt werden die folgenden Werte angenommen:

| Polyamid | $\Delta H_m^0$ | $T_g$ | $T_m$ |
|---|---|---|---|
| PA 6 | 230 | 40 | 260 |
| PA 11 | 226 | 46 | 220 |

EP 3 640 280 A1

(fortgesetzt)

| Polyamid | $\Delta H_m^0$ | $T_g$ | $T_m$ |
|---|---|---|---|
| PA 12 | 210 | 37 | 179 |
| PA 6.6 | 300 | 50 | 280 |
| PA 6.10 | 260 | 50 | 233 |
| PA 6.12 | 215 | 54 | 215 |
| PA 10.9 | 250 | | 214 |
| PA 10.10 | 200 | 60 | 216 |

Bevorzugt weisen die erfindungsgemäßen Formmassen keinen Zusatz von ionischen Flüssigkeiten zur Erhöhung der Leitfähigkeit, wie z.B. in EP2635638A1 (US20130299750A1) beschrieben. Weiterhin bevorzugt weisen die erfindungsgemäßen Formmassen keine Metalle in elementarer Form auf.

Bevorzugt sind die erfindungsgemäßen Formmassen frei von Weichmachern, bevorzugt niedermolekularen Weichmachern. Weichmacher in diesem Sinne sind DIN EN ISO 1043-3:2017 gelistet und weiterhin z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure; p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid.

Die erfindungsgemäße Formmasse wird aus den einzelnen Bestandteilen vorzugsweise durch Schmelzemischen in einem knetenden Aggregat also unter Anwendung von Scherkräften hergestellt.

Bevorzugte Carbon Nanotubes haben typischerweise die Form von Röhren, die aus Graphitschichten gebildet werden. Die Graphitlagen sind in konzentrischer Art um die Zylinderachse angeordnet. Carbon Nanotubes werden auch als Kohlenstoff-Nanofibrillen bezeichnet. Sie haben ein Längen-zu-Durchmesser-Verhältnis von mindestens 5, vorzugsweise von mindestens 100, besonders bevorzugt von mindestens 1.000. Der Durchmesser der Nanofibrillen liegt typischerweise im Bereich von 0,003 bis 0,5 µm, vorzugsweise im Bereich von 0,005 bis 0,08 µm, besonders bevorzugt im Bereich von 0, 006 bis 0,05 µm. Die Länge der Kohlenstoff-Nanofibrillen beträgt typischerweise 0,5 bis 1.000 µm, vorzugsweise 0,8 bis 100 µm, besonders bevorzugt 1 bis 10 µm. Die Kohlenstoff-Nanofibrillen besitzen einen hohlen, zylinderförmigen Kern. Dieser Hohlraum hat typischerweise einen Durchmesser von 0,001 bis 0,1 µm, bevorzugt einen Durchmesser von 0,008 bis 0,015 µm. In einer typischen Ausführungsform der Carbon Nanotubes besteht die Wand der Fibrille um den Hohlraum beispielsweise aus 8 Graphitlagen. Die Kohlenstoff- Nanofibrillen können dabei als Agglomerate von bis zu 1.000 µm Durchmesser aus mehreren Nanofibrillen vorliegen. Die Agglomerate können die Form von Vogelnestern, von gekämmtem Garn oder von offenen Netzstrukturen besitzen. Die Synthese der Carbon Nanotubes erfolgt beispielsweise in einem Reaktor, der ein Kohlenstoff enthaltendes Gas und einen Metallkatalysator enthält, wie es z. B. in US5643502A beschrieben wird.

Neben mehrwandigen Carbon Nanotubes (MWCNTs, multi-walled carbon nanotubes) können erfindungsgemäß auch einwandige Carbon Nanotubes (SWCNTs, single-walled carbon nanotubes) eingesetzt werden. SWCNTs haben typischerweise einen Durchmesser im Bereich weniger Nanometer, erreichen jedoch im Verhältnis zu ihrem Querschnitt beträchtliche Längen, typischerweise im Bereich mehrerer Mikrometer. Der strukturelle Aufbau von SWCNTs leitet sich von einatomigen Graphit-Lagen (Graphen) ab, die man sich zu einem nahtlosen Zylinder aufgerollt vorstellen kann. SWCNTs können hervorragende elektrische Leiter sein. Die erreichbaren Stromdichten liegen mit $10^9$ A/cm$^2$ etwa 1000-fach höher als bei Metalldrähten aus Kupfer oder Silber. Die Herstellung von SWCNTs wird beispielsweise in US5424054 beschrieben.

Weiterhin ist eine Formmasse bevorzugt, die zu mindestens 70 Gew.-%, besonders bevorzugt 80 Gew.-% und zu insbesondere bevorzugt mindestens 90 Gew.-% eine teilkristalline Polyamidkomponente enthält und die Formmasse einen Füllstoff enthält, der der Formmasse Leitfähigkeit verleiht, dadurch charakterisiert, dass die Formmasse keinen Kristallitschmelzpunkt unter 50°C aufweist,
wobei die Polyamidkomponente die Komponenten A und B enthält,

A PA Homopolymer des Typs PA X.Y oder PA Z , wobei X für einen Diaminrest (DA), Y für einen Dicarboxylrest (DC), und Z für einen alpha-omega-Aminosäurerest steht;
B PA Copolymer, des Typs PA X'.Y' wobei X' für einen Diaminrest (DA') und Y' für einen Dicarboxylrest (DC') steht; wobei ein Teil der Diaminreste (DA') durch einen Polyether ersetzt ist, der zwei Aminotermini oder zwei Hydroxytermini aufweist;

wobei der Anteil Polyether an der Summe der Komponenten A und B zwischen 0,5 bis 15 Gew.-% beträgt;
wobei das PA Homopolymer bis zu 10 mol% aus anderen amidbildenden Bausteinen gebildet werden kann;

6

wobei das PA-Copolymer der Komponente B einen Polyetheranteil von 8 bis 30 Gew.-% aufweist, bezogen auf die Gesamtmasse des PA-Copolymers;

wobei der Anteil an Füllstoff zur Erhöhung der Leitfähigkeit von 1 bis 10 Gew.-% beträgt, bezogen auf die Gesamtmasse aus Polyamidkomponente und Füllstoff zur Erhöhung der Leitfähigkeit.

Weiterhin ist eine Formmasse bevorzugt, die zu mindestens 70 Gew.-%, besonders bevorzugt 80 Gew.-% und zu insbesondere bevorzugt mindestens 90 Gew.-% eine teilkristalline Polyamidkomponente enthält und die Formmasse einen Füllstoff enthält, der der Formmasse Leitfähigkeit verleiht, dadurch charakterisiert, dass die Formmasse keinen Kristallitschmelzpunkt unter 50°C aufweist,

wobei die Polyamidkomponente die Komponenten A und B enthält,

A PA Homopolymer des Typs PA X.Y oder PA Z , wobei X für einen Diaminrest (DA), Y für einen Dicarboxylrest (DC), und Z für einen alpha-omega-Aminosäurerest steht;

B PA Copolymer, des Typs PA X'.Y' wobei X' für einen Diaminrest (DA') und Y' für einen Dicarboxylrest (DC') steht; wobei ein Teil der Diaminreste (DA') durch einen Polyether ersetzt ist, der zwei Aminotermini oder zwei Hydroxytermini aufweist;

wobei der Anteil Polyether an der Summe der Komponenten A und B zwischen 0,5 bis 15 Gew.-% beträgt;

wobei das PA Homopolymer bis zu 10 mol% aus anderen amidbildenden Bausteinen gebildet werden kann;

wobei der Polyether ein zahlenmittleres Molekulargewicht $M_n$ von maximal 5000 g/mol aufweist; wobei die Kettenlängen des PA Copolymers und des PA Homopolymers der Polyamidkomponente im Durchschnitt um nicht mehr als 10% in Bezug auf die Kohlenstoffatomzahl der amidbildenden Bausteine voneinander abweichen, wobei die Abweichung auf den höheren Wert der Kettenlängen bezogen wird.

Weiterhin ist eine Formmasse bevorzugt, die zu mindestens 70 Gew.-%, besonders bevorzugt 80 Gew.-% und zu insbesondere bevorzugt mindestens 90 Gew.-% eine teilkristalline Polyamidkomponente enthält und die Formmasse einen Füllstoff enthält, der der Formmasse Leitfähigkeit verleiht, dadurch charakterisiert, dass die Formmasse keinen Kristallitschmelzpunkt unter 50°C aufweist,

wobei die Polyamidkomponente die Komponenten A und B enthält,

A PA Homopolymer ausgewählt ist aus PA 6, PA 11, PA 12, PA 4.6, PA 6.6, PA 6.9, PA 6.10, PA 6.12, PA 9.10, PA 9.12, PA 10.10, PA 10.12, PA 12.12;

B PA Copolymer, des Typs PA X'.Y' wobei X' für einen Diaminrest (DA') und Y' für einen Dicarboxylrest (DC') steht; wobei ein Teil der Diaminreste (DA') durch einen Polyether ersetzt ist, der zwei Aminotermini oder zwei Hydroxytermini aufweist;

wobei der Anteil Polyether an der Summe der Komponenten A und B zwischen 0,5 bis 15 Gew.-% beträgt;

wobei das PA Homopolymer bis zu 10 mol% aus anderen amidbildenden Bausteinen gebildet werden kann;

wobei die Formmasse einen Kristallinitätsgrad aufweist, der niedriger ist, als der Kristallinitätsgrad einer Mischung, die die gleichen Komponenten A und Füllstoff zur Erhöhung der Leitfähigkeit in gleichen Mengen aufweist, wobei eventuelle weitere Bestandteile der Formmasse ebenfalls identisch in Identität und Menge sind.

Die erfindungsgemäßen Formmassen enthalten bevorzugt weitere Additive.

Bevorzugte Additive sind Oxidationsstabilisatoren, UV-Stabilisator, Hydrolysestabilisatoren, Schlagzähmodifikatoren, Pigmente, Farbstoffe und/oder Verarbeitungshilfsmittel.

In einer bevorzugten Ausführungsform enthalten die Formmassen eine wirksame Menge eines Oxidationsstabilisators und besonders bevorzugt eine wirksame Menge eines Oxidationsstabilisators in Kombination mit der wirksamen Menge eines kupferhaltigen Stabilisators. Geeignete Oxidationsstabilisatoren sind beispielsweise aromatische Amine, sterisch gehinderte Phenole, Phosphite, Phosphonite, Thiosynergisten, Hydroxylamine, Benzofuranonderivate, acryloylmodifizierte Phenole etc. Derartige Oxidationsstabilisatoren sind in einer Vielzahl von Typen kommerziell erhältlich, beispielsweise unter den Handelsnamen Naugard 445, Irganox 1010, Irganox 1098, Irgafos 168, P-EPQ oder Lowinox DSTDP. Im Allgemeinen enthalten die Formmassen etwa 0,01 bis etwa 2 Gew.-% und bevorzugt etwa 0,1 bis etwa 1,5 Gew.-% eines Oxidationsstabilisators.

Darüber hinaus können die Formmassen auch einen UV-Stabilisator bzw. einen Lichtstabilisator vom HALS-Typ enthalten. Geeignete UV-Stabilisatoren sind in erster Linie organische UV-Absorber, beispielsweise Benzophenonderivate, Benzotriazolderivate, Oxalanilide oder Phenyltriazine. Lichtstabilisatoren vom HALS-Typ sind Tetramethylpiperidinderivate; es handelt sich hier um Inhibitoren, die als Radikalfänger wirken. UV-Stabilisatoren und Lichtstabilisatoren können vorteilhaft in Kombination eingesetzt werden. Beide sind in einer Vielzahl von Typen kommerziell erhältlich; hinsichtlich der Dosierung kann den Herstellerangaben gefolgt werden.

Die Formmassen können zusätzlich einen Hydrolysestabilisator enthalten wie etwa ein monomeres, oligomeres oder polymeres Carbodiimid oder ein Bisoxazolin.

Weiterhin können die Formmassen Schlagzähmodifikatoren enthalten. Schlagzähmachende Kautschuke für Polyamidformmassen sind Stand der Technik. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Derartige Kautschuke können auch zusammen mit einem unfunktionalisierten Polyolefin wie z. B. isotaktischem Polypropylen eingesetzt werden, wie in der EP0683210A2 (US5874176A) beschrieben.

Geeignete Pigmente und/oder Farbstoffe sind beispielsweise, Eisenoxid, Zinksulfid, Ultramarin, Nigrosin, Perlglanzpigmente.

Geeignete Verarbeitungshilfsmittel sind beispielsweise Paraffine, Fettalkohole, Fettsäureamide, Stearate wie Calciumstearat, Paraffinwachse, Montanate oder Polysiloxane.

Erfindungsgemäße mehrschichtige Hohlprofile weisen mindestens eine Schicht hergestellt aus den erfindungsgemäßen Formmassen auf, die mit einer Flüssigkeit in direktem Kontakt steht. Bevorzugt ist dies die innerste Schicht des Hohlkörpers.

Die Flüssigkeit ist bevorzugt eine Mischung von chemischen Substanzen, enthaltend Kohlenwasserstoffe und mindestens einen Alkohol, mehr bevorzugt ist die Flüssigkeit ein Kraftstoff der als Antriebstoff für Verbrennungsmaschinen geeignet ist, insbesondere bevorzugt ist der Kraftstoff ein KFZ-Kraftstoff wie z. B. Diesel oder Benzin.

Bevorzugt enthält der Kraftstoff Alkohole mit 1 bis 8 Kohlenstoffatomen, mehr bevorzugt Methanol, Ethanol, Propanol, Butanol oder Pentanol. Die Alkohole mit mindestens drei Kohlenstoffatomen können in ihrer n-Form, also linear und mit endständiger hydroxygruppe, oder ihren diversen iso-Formen vorliegen, die Hydroxygruppe kann dabei primär, sekundär oder tertiär sein, bevorzugt primär. Mehr bevorzugt sind mindestens 80 Vol.-% der Alkohole lineare Kohlenwasserstoffe mit endständiger Hydroxygruppe.

Bevorzugt weisen die Kraftstoffe mindestens 7 Vol.-%, mehr bevorzugt mindestens 10 Vol.-%, besonders bevorzugt mindestens 13 Vol.-%, insbesondere bevorzugt mindestens 16 Vol.-% Alkohol auf.

Der ein- oder mehrschichtige erfindungsgemäße Hohlkörper ist vorzugsweise ein Rohr oder Behälter, vorzugsweise eine Komponente eines kraftstoffführenden Systems, bevorzugt eine Kraftstoffleitung oder ein Kraftstoffbehälter.

Die Schicht, hergestellt aus den erfindungsgemäßen Formmassen, die bevorzugt mit der Flüssigkeit in Kontakt steht, ist elektrisch leitfähig. Der Hohlkörper besitzt einen spezifischen Oberflächenwiderstand von maximal $10^9 \, \Omega$/square und vorzugsweise maximal $10^6 \, \Omega$/square. Geeignete Messmethoden sind im Stand der Technik bekannt, bevorzugt wird der spezifische Oberflächenwiderstand wie in der SAE J 2260 vom November 2004 erläutert bestimmt.

Ein bevorzugter mehrschichtiger erfindungsgemäßer Hohlkörper weist eine sogenannte Sperrschicht auf. Diese Sperrschicht weist einen sehr niedrigen Diffusionskoeffizienten für die Kraftstoffkomponenten auf. Geeignete Materialien für die Sperrschickt sind Fluorkohlenwasserstoffe und Vinylalkoholpolymere. Bevorzugt weist der bevorzugte mehrschichtige Hohlkörper eine sogenannte EVOH Sperrschicht auf. EVOH ist ein Copolymer aus Ethylen und Vinylalkohol. Der Ethylengehalt im Copolymeren beträgt bevorzugt 20 bis 45 mol-% und insbesondere 25 bis 35 mol-%. Eine Vielzahl von Typen sind im Handel erhältlich. Beispielsweise sei auf die Firmenschrift "Introduction to Kuraray EVAL™ Resins", Version 1.2/9810 der Firma Kuraray EVAL Europe verwiesen. Die Sperrschicht kann neben dem EVOH gemäß dem Stand der Technik weitere Zusätze enthalten, wie sie für Sperrschichtanwendungen üblich sind. Derartige Zusätze sind in der Regel Know-How des EVOH-Lieferanden.

Der bevorzugte mehrschichtige erfindungsgemäße Hohlkörper weist eine Sperrschicht (SpS) und als innerste Schicht (Si) eine Schicht, hergestellt aus den erfindungsgemäßen Formmassen, auf, wobei der Hohlkörper einen spezifischen Oberflächenwiderstand von maximal maximal $10^6 \, \Omega$/square gemäß SAE J 2260 vom November 2004 aufweist.

Zwischen Sperrschicht (SpS) und innerster Schicht (Si) des bevorzugten mehrschichtigen Hohlkörpers können weitere Schichten angeordnet sein, bevorzugt mindestens eine Schicht (HVi), die die Haftung zwischen Si und SpS gewährleistet. Bevorzugt ist zwischen SpS und Si nur eine Haftvermittlerschicht angeordnet. Sollte die Haftung zwischen SpS und Si ausreichend groß sein, so kann selbstverständlich auf die haftvermittelnde Schicht (HVi) verzichtet werden.

Haftvermittler zwischen Sperrschicht und der Schicht aus der erfindungsgemäßen Formmasse sind dem Fachmann bekannt, bevorzugte Haftvermittler sind auf Basis von Polyamiden, bevorzugt aus Mischungen von PA 6.12 und PA 6, besonders bevorzugt aus schlagzähmodifizierten Polyamiden und insbesondere bevorzugt enthaltend 60 bis 80 Gew.-% PA 6.12, 10 bis 25 Gew.-% PA 6 und 5 bis 15 Gew.-% Schlagzähmodifier, wobei die Massenanteile so gewählt sind, dass ihre Summe 100 Gew.-% ergeben.

Bevorzugt sind Schichten, die im bevorzugten erfindungsgemäßen Hohlkörper auf der Innenseite der Sperrschicht angeordnet sind, frei von Weichmachern wie oben definiert. Weiterhin bevorzugt weisen diese Schichten nur die gerade nötige Menge an Additiven auf, wie z.B. Stabilisatoren sowie Verarbeitungshilfsmitteln.

Der bevorzugte erfindungsgemäße Hohlkörper weist bevorzugt von der Sperrschicht nach außen mindestens eine weitere Schicht auf. Diese äußeren Schichten sind bevorzugt ebenfalls Schichten, die zu mindestens 50 Gew.-%, mehr bevorzugt mindestens 60 Gew.-%, weiter mehr bevorzugt mindestens 70 Gew.-%, besonders bevorzugt mindestens 80 Gew.-% und insbesondere bevorzugt mindestens 90 Gew.-% an Polyamiden aufweist.

Bei diesen Polyamiden handelt es sich bevorzugt um PA Homopolymere des Typs PA X.Y oder PA Z wie sie oben bereits beschrieben wurden. Bevorzugt ist das PA Homopolymer der Außenschicht (Sa) des bevorzugten Hohlkörpers nicht identisch zu dem der innersten Schicht (Si). Bevorzugt ist das PA Homopolymere der Außenschicht (Sa) ein PA des Typs PA Z, besonders bevorzugt ein PA11 oder PA12, insbesondere bevorzugt ein PA12.

Zwischen Außenschicht (Sa) und Sperrschicht (SpS) des bevorzugten erfindungsgemäßen Hohlkörpers können weitere Schichten angeordnet sein, bevorzugt mindestens eine Schicht (HVa), die die Haftung zwischen Sa und SpS gewährleistet. Bevorzugt ist zwischen Sa und SpS nur eine Haftvermittlerschicht angeordnet. Sollte die Haftung zwischen Sa und SpS ausreichend groß sein, so kann selbstverständlich auf die haftvermittelnde Schicht (HVa) verzichtet werden.

Die haftvermittelnde Schicht (HVa) ist bevorzugt frei von Weichmachern wie oben definiert. Weiterhin bevorzugt weist diese Schicht nur die gerade nötige Menge an Additiven auf, wie z.B. Stabilisatoren sowie Verarbeitungshilfsmitteln.

Bevorzugt sind die Haftvermittlerschichten HVi und HVa in ihrer chemischen Zusammensetzung identisch.

Weiterhin bevorzugt sind mehrschichtige Hohlprofile, die mindestens eine Schicht aufweisen, die aus der erfindungsgemäßen Formmasse besteht, wobei diese Schicht mit einer Flüssigkeit in direktem Kontakt steht; und die weiterhin mindestens eine Sperrschicht aufweisen.

Weiterhin bevorzugt sind mehrschichtige Hohlprofile, die mindestens eine Schicht aufweisen, die aus der erfindungsgemäßen Formmasse besteht, die weiterhin mindestens eine Sperrschicht aus Fluorkohlenwasserstoffen oder Vinylalkoholpolymeren aufweisen; wobei Schichten, die im Hohlkörper auf der Innenseite der Sperrschicht angeordnet sind, frei von Weichmachern sind.

Das erfindungsgemäße Hohlprofil kann noch mit einer zusätzlichen Elastomerschicht ummantelt sein. Zur Ummantelung eignen sich sowohl vernetzende Kautschukmassen als auch thermoplastische Elastomere. Die Ummantelung kann sowohl mit als auch ohne Verwendung eines zusätzlichen Haftvermittlers auf den Mehrschichtverbund aufgebracht werden, beispielsweise mittels Coextrusion, Extrusion über einen Querspritzkopf oder dadurch, dass ein vorgefertigter Elastomerschlauch über das fertig extrudierte Mehrschichtrohr geschoben wird. In der Regel besitzt die Ummantelung eine Dicke von 0,1 bis 4 mm und bevorzugt von 0,2 bis 3 mm.

Geeignete Elastomere sind beispielsweise Chloroprenkautschuk, Ethylen/Propylen-Kautschuk (EPM), Ethylen/Propylen/Dien-Kautschuk (EPDM), Epichlorhydrinkautschuk (ECO), chloriertes Polyethylen, Acrylatkautschuk, chlorsulfoniertes Polyethylen, Siliconkautschuk, weichgemachtes PVC, Polyetheresteramide oder Polyetheramide.

Die Fertigung des Mehrschichtverbundes kann ein- oder mehrstufig erfolgen, beispielsweise mittels einstufiger Verfahren auf dem Wege des Mehrkomponentenspritzgusses, der Coextrusion, des Coextrusionsblasformens (beispielsweise auch 3D-Blasformen, Schlauchextrusion in eine geöffnete Formhälfte, 3D-Schlauchmanipulation, Saugblasformen, 3D-Saugblasformen, sequentielles Blasformen) oder mittels mehrstufiger Verfahren, wie z. B. in der US5554425 beschrieben.

Die Erfindung soll im nachfolgenden experimentellen Teil beispielhaft erläutert werden.

In den Beispielen wurden folgende Komponenten bzw. Formmassen verwendet:

| | |
|---|---|
| PA Homopolymer 1 | Eine Extrusionsformmasse auf Basis von PA 6.12 der EVONIK Resource Efficiency GmbH (VESTAMID D22) |
| PA Homopolymer 2 | Eine Extrusionsformmasse auf Basis von PA 10.10 der EVONIK Resource Efficiency GmbH (VESTAMID DS22) |
| PA Homopolymer 3 | Eine Extrusionsformmasse auf Basis von PA 12 der EVONIK Resource Efficiency GmbH (VESTAMID L1901) |
| PEPA 1 | Eine Extrusionsformmasse auf Basis von PA 6.12 der EVONIK Resource Efficiency GmbH, enthaltend 25 Gew.-% eines bisaminoterminierten Polyethers mit einer Molmasse von 400 g/mol (Elastamin RP-405, Huntsman) |
| PEPA 2 | Eine Extrusionsformmasse auf Basis von PA 10.10 der EVONIK Resource Efficiency GmbH, enthaltend 35,4 Gew.-% eines bishydroxyterminierten Polyethers (Polytetrahydrofuran) mit einer Molmasse von 650 g/mol |
| PEPA 3 | Eine Extrusionsformmasse auf Basis von PA 12 der EVONIK Resource Efficiency GmbH, enthaltend 29 Gew.-% eines bishydroxyterminierten Polyethers (Polytetrahydrofuran) mit einer Molmasse von 1000 g/mol ist |
| EVAL | Ein EVOH der Fa. Kuraray mit 27 mol% Ethylen (EVAL LA170B) |
| IM | Schlagzähmodifizierer: Exxelor VA1803 (9%) + 1% Lotader AX8900 |
| Stabilisator | Mischung aus Irgafos und Irganox. |
| Haftvermittler | Eine Extrusionsformmasse auf Basis von PA 6.12 der EVONIK Resource Efficiency GmbH (VESTAMID SX8002 oder VESTAMID SX8080; SX8080 weist die gleichen Kenndaten wie SX8002 auf, lediglich ohne Weichmacher) |

Beispiel 1, Formmassen:

Es wurden in einem Haake-Kneter (HAAKE Rheomix 600 OS) die nachfolgenden Formmassen durch Schmelzemischen der Komponenten compoundiert.

Tabelle 1: Zusammensetzung der Formmassen des Beispiels 1.
PEPA bedeutet PA Copolymer, PE bedeutet Polyether, CNT bedeutet Carbonanotubes;
der Gehalt an PE bedeutet der Gewichtsanteil des Polyethers in der Formmasse, ohne Berücksichtigung der Masse der CNT; der Gehalt an CNT ist der Massenanteil bezogen auf die gesamte Formmasse

| Formmasse | PA Homopolymer | PEPA | Gehalt an PE [Gew.-%] | Gehalt an CNT [Gew.-%] |
|---|---|---|---|---|
| 1 | 1 | 0 | 0 | 0 |
| 11 | 1 | 0 | 0 | 3 |
| 12 | 1 | 1 | 4,25 | 0 |
| 13 | 1 | 1 | 4,25 | 3 |
| 14 | 0 | 1 | 25 | 0 |
| 15 | 1 | 1 | 21 | 0 |
| 2 | 2 | 0 | 0 | 0 |
| 21 | 2 | 0 | 0 | 3 |
| 22 | 2 | 2 | 4,25 | 0 |
| 23 | 2 | 2 | 4,25 | 3 |
| 24 | 0 | 2 | 35,4 | 0 |
| 3 | 3 | 0 | 0 | 0 |
| 31 | 3 | 0 | 0 | 3 |
| 32 | 3 | 3 | 4,25 | 0 |
| 33 | 3 | 3 | 4,25 | 3 |
| 34 | 3 | 3 | 2,15 | 0 |
| 35 | | 3 | 29 | 0 |

Die Formmassen 13, 23, und 33 sind erfindungsgemäß.

Beispiel 2, Bestimmung thermischer Eigenschaften:

Mittels DSC in Anlehnung an die ISO 11357 (Perkin Elmer) wurden bei einer Rate von 20K/min die Glasübergangstemperatur $T_g$ und die Kristallitschmelzpunkte $T_m$ beim 1. Aufheizen bestimmt, und der Kristallinitätsgrad $X_c$ aus der Bestimmung der Schmelzenthalpie beim 2. Aufheizen berechnet.

Tabelle 2: Bestimmung der thermischen Eigenschaften gemäß Beispiel 2; nb bedeutet, der Wert nicht bestimmt wurde

| Formmasse | $T_g$ [°C] | $T_m$ [°C] | $X_c$ [%] |
|---|---|---|---|
| 1 | 41 | 215 | 38 |
| 11 | 39 | 216 | 45 |
| 12 | 37 | 216 | 37 |
| 13 | 39 | 216 | 44 |
| 14 | 43 | 0/163/197 | 32 |
| 15 | 38 | 0/184/195/206 | 31 |
| 2 | 41 | 200 | 41 |
| 21 | 37 | 198 | 45 |
| 22 | 37 | 200 | 43 |
| 23 | 42 | 198 | 43 |
| 24 | 42 | -23/186 | 32 |

(fortgesetzt)

| Formmasse | $T_g$ [°C] | $T_m$ [°C] | $X_c$ [%] |
|---|---|---|---|
| 3 | 38 | 178 | 32 |
| 31 | 40 | 179 | 37 |
| 32 | 37 | 179 | 36 |
| 33 | 40 | 179 | 36 |
| 34 | 40 | 177 | 32 |
| 35 | 35 | -22/167 | 24 |

In allen Fällen ist zu beobachten, dass der Kristallinitätsgrad $X_c$ bei Zugabe der Carbonanotubes zu dem Basispolymer ansteigt. Weiterhin ist in allen Fällen zu beobachten, dass die Kristallinität $X_c$ abgesenkt werden kann, wenn ein kleiner Teil des Basispolymers gegen ein PEBA ersetzt wird. Die erfindungsgemäßen Formmassen weisen keinen Kristallitschmelzpunkt unter 50°C auf, dies gilt auch für die Formmasse 34, die einen niedrigeren Gehalt an Polyether aufweist.

Beispiel 3, Anfertigung von Hohlprofilen:

Es wurden Fünfschichtrohre mit einem Außendurchmesser von 8 mm und einer Gesamtwandstärke von 1 mm mittels Coextrusion auf einer Mehrschichtrohranlage der Firma Bellaform hergestellt.
Das Vergleichsbeispiel unterscheidet sich lediglich in der Zusammensetzung der inneren Schicht (Schicht I)

Tabelle 3: Schichtenkonfiguration der Hohlprofile nach Beispiel 3

| erfindungsgemäß | | | |
|---|---|---|---|
| Schicht V | VESTAMID LX9002 | äußere Schicht | 0,45 mm |
| Schicht IV | Haftvermittler, außen | Adhäsionsschicht | 0,1 mm |
| Schicht III | EVAL | Sperrschicht | 0,15 mm |
| Schicht II | Haftvermittler, innen | Adhäsionsschicht | 0,1 mm |
| Schicht I | Extrusionsformmasse auf Basis PEPA 1 | innere Schicht | 0,2 mm |
| | Zusammensetzung: | | |
| | Formmasse 13 | 89,5 Gew.-% | |
| | IM | 10 Gew.-% | |
| | Stabilisator | 0,5 Gew.-% | |
| Vergleich | | | |
| Schicht I | Extrusionsformmasse auf Basis PA Homopolymer 1 | innere Schicht | 0,2 mm |
| | Zusammensetzung: | | |
| | Formmasse 11 | 89,5 Gew.-% | |
| | IM | 10 Gew.-% | |
| | Stabilisator | 0,5 Gew.-% | |

Beispiel 4: Prüfungen:

Es wurden Rohre des Beispiels 3 den folgenden Prüfungen unterzogen.

a) Zugversuch (mit MLT): Die Mono- und Mehrschichtrohre wurden in Anlehnung an DIN EN ISO 527-1 mit einer Abzugsgeschwindigkeit von 100 mm/min geprüft. Die Probekörper waren ca. 200 mm lang, die Einspannlänge betrug 100 mm und der Abstand der Dehnungsaufnehmer 50 mm.

b) Schlagversuche: Die Messung der Schlagzähigkeit der Mono- und Mehrschichtrohre bei 23 °C erfolgte nach DIN 73378.
Die Messung der Schlagzähigkeit der Mono- und Mehrschichtrohre bei -25 °C erfolgte nach VWTL52435 mit einem Fallhammer der Masse 880 g.
Die Messung der Schlagzähigkeit der Mono- und Mehrschichtrohre bei -40 °C erfolgte nach SAE J2260 mit einem Fallhammer der Masse 500 g.

Für alle Versuche wurden 10 Probestücke von etwa 100mm Länge vermessen. Nach der Beanspruchung erfolgte eine visuelle Überprüfung auf Beschädigung.

c) Trennversuch: Der Trennversuch wurde mit einer Zugprüfmaschine des Typs BZ 2.5/TN1S der Firma Zwick durchgeführt, an der eine Zugvorrichtung und eine drehende Umlenkrolle aus Metall befestigt sind, um die einzelnen Schichten der Probekörper voneinander trennen zu können. Über den Trennversuch in Anlehnung an DIN EN ISO 2411 wurde die Haftung zwischen zwei Schichten beurteilt, indem die Kraft gemessen wurde, die benötigt wird, um die beiden Schichten voneinander zu trennen. Hierfür wurden von den Mehrschichtrohren 20 cm lange Rohrabschnitte mit Hilfe einer Schneidevorrichtung längs gedrittelt.

Vor Beginn der Messung wurde mit Hilfe eines Messschiebers die Probenbreite mehrfach an unterschiedlichen Stellen gemessen und der Mittelwert zur Auswertung verwendet. Danach wurde das angetrennte Ende einer Schicht in eine Klemme eingespannt, die diese kontinuierlich in einem Winkel von 90° von der zweiten Schicht abzog.

Die Schichten wurden mit einer Prüfgeschwindigkeit von 50 mm/min voneinander abgezogen und parallel dazu wurde ein Diagramm der benötigten Kraft in Newton gegen den Weg in Millimetern aufgenommen. Aus diesem wurde, im Plateaubereich, der Trennwiderstand in N/mm ermittelt, der sich auf die Breite der haftenden Kontaktfläche bezieht.

d) Kraftstoffdurchlässigkeit: Über die Permeationsmessung wurde bestimmt, wie viel Kraftstoff pro Tag und Meter Rohr bzw. Quadratmeter Rohrinnenfläche bei einer statischen Lagerung bei 60 °C durch eine Kraftstoffleitung permeiert. Dazu wurden jeweils 300 mm lange Rohrabschnitte an einem Ende mit einem druckfesten Vorratsgefäß verschraubt und ausgewogen, anschließend mit 300 ml CM 15 befüllt und das zweite Ende verschlossen. Diese Prüflinge wurden in einem explosionsgeschützten Wärmeschrank mit Zwangsdurchlüftung bei 60°C gelagert. Die befüllten Rohre wurden abermals ausgewogen, um in bestimmten Zeitabständen den Masseverlust und somit die permeierte Kraftstoffmasse bestimmen zu können. Die effektive Permeationslänge betrug dabei 285 mm.

e) Auswaschbeständigkeit: Mittels der Auswaschbestimmung wurde ermittelt, wieviel $g/m^2$ Rohrinnenfläche an löslichen und unlöslichen Bestandteile aus dem Mehrschichtverbund nach Kraftstofflagerung extrahiert werden. Dazu wurde ein Rohrabschnitt von 2 m Länge vollständig mit dem Testkraftstoff CM15 befüllt und verschlossen bei 60 °C für 96 h gelagert. Nach Abkühlung wurde das Rohr in ein Becherglas entleert und mit 20 ml CM 15 gespült. Die erhaltene Flüssigkeit wurde bei 23 °C für 24 h gelagert. Im Anschluss wurde die Prüfflüssigkeit bei 23 °C unter Vakuum gefiltert und mit 20 ml CM 15 nachgespült. Das gefilterte Medium ließ man im Abzug bei Raumtemperatur verdampfen. Daraus ergaben sich mittels Auswiegen die löslichen Extrakte. Der Filter wurde 24 h bei 40 °C getrocknet und ausgewogen. Über die Differenz zum ursprünglichen Gewicht des Filters wurden die unlöslichen Extrakte bestimmt.

Der Test gilt als bestanden, wenn weniger als 6 $g/m^2$ an löslichen und weniger als 0,5 $g/m^2$ an unlöslichen Bestandteilen ausgewaschen wurden.

f) Durchführung der Wärmealterung der MLTs beschreiben (Umluftwärmeschrank, 200 h bei 150°C und 1 h bei 170°C)

In einem Umluft-Wärmeschrank wurden etwa 100 bzw. 200 mm lange Rohrstücke der entsprechenden Mono- oder Mehrschichtrohre bei erhöhten Temperaturen für definierte Zeiten eingelagert. Dabei ist zu beachten, dass die Rohrstücke frei im Umluftofen hängen, ohne sich gegenseitig oder die Metalloberflächen zu berühren.

Die Länge der Rohrstücke ist dabei abhängig von der anschließenden mechanischen Prüfung. Wie unter b) beschrieben wurden für Rohrschlagprüfungen etwa 100 mm lange Prüfkörper eingesetzt. Nach einer Lagerung bei 150°C für 200 h mit anschließender Konditionierung im Normklima 23°C / 50 % rel. Feuchte für > 24 h wird eine Rohrschlagprüfung, wie unter b) beschrieben durchgeführt. Analog erfolgt die Rohrschlagprüfung an Rohrstücken, die zuvor für 1 h bei 170 °C gelagert wurden.

g) Bestimmung des Isolationswiderstands und dessen Änderung durch Kraftstofflagerung mit CM15, CE10 und FAM B bei 60 °C.

An mindestens drei Rohrabschnitten von 42 cm Länge wurde gemäß SAE J2260-1996 der elektrische Widerstand bestimmt. Die Rohrinnenflächen wurden dazu an den Rohrenden mit Steckern von definierter Länge und Durchmesser kontaktiert. Mit Prüfspannungen zwischen 10 V und 500 V wurde der elektrische Widerstand im Bereich von $10^2$ bis $10^{14}$ $\Omega$ gemessen und mit der Rohrinnenfläche zwischen den Steckern in den geforderten Oberflächenwiderstand mit der Einheit "ohm per square" umgerechnet.

Hiernach wurden die Rohrabschnitte an einem Ende mit einem Vorratsgefäß verschraubt und ausgewogen, anschließend mit 300 ml Prüfkraftstoff (CM15) befüllt und das zweite Ende verschlossen. Das Rohr befindet sich unter dem Vorratsgefäß sodass die Rohrinnenfläche während der Lagerung und der elektrischen Messungen vollständig mit Kraftstoff gefüllt war. Über die metallischen Rohrverschraubungen mit Stützhülsen an den Rohrenden wurde die Innenschicht kontaktiert und der Widerstand direkt nach der Befüllung bestimmt. Die Prüflinge wurden in einem explosionsgeschützten Wärmeschrank mit Zwangsdurchlüftung bei 60 °C gelagert und in regelmäßigen Intervallen auf 23 °C abgekühlt und die Änderung des elektrischen Widerstandes für eine Prüfzeit von etwa 1000 Stunden bestimmt. Parallel zum elektrischen Widerstand wurde die absolute Länge des freien Rohrabschnittes mit einem Maßband zwischen den Rohrverschraubungen und die Änderung der Länge mit einer Messuhr im Bereich 0 bis 5 % bestimmt.

Der Test gilt als bestanden, wenn der Widerstand mit kleiner als $10^6$ Ohm/Fläche bestimmt wird Zusammensetzung der Prüfkraftstoffe CE10 und CM 15 und FAM B sind in den Referenzen der SAE J2260-1996; CM 15 entspricht ASTM D471-15, "Reference Fuel I" (Isooctan/Toluol, Methanol); FAM B entspricht der Prüfflüssigkeit nach DIN 51604-2 (1984); CE10 entspricht einer Mischung aus "Fuel C" gemäß ASTM D471-15 plus 10 ± 1 Vol.-% Ethanol.

Die Ergebnisse sind in der Tabelle 4 dargestellt.

Tabelle 4: Prüfergebnisse der Rohre gemäß Beispiel 3

| Prüfung | erfindungsgemäß | Vergleich |
|---|---|---|
| Alterungsbeständigkeit bei 150°C für 200 h (DIN 53497) anschließend Pendelschlag nach ISO 179-1 bei RT | kein Bruch | 10 von 10 gebrochen |
| Kaltschlag bei -25°C/880 g | kein Bruch | 1 von 10 gebrochen |
| Kaltschlag bei -40°C/500 g | kein Bruch | 2 von 10 gebrochen |
| Auswaschbeständigkeit nach Punkt e) | bestanden | nicht ermittelt |
| Isolationswiderstand nach Punkt g) | bestanden | nicht bestanden |
| Kraftstoffdurchlässigkeit nach Punkt d) | 4,3 g/(m²*d) | n. bestimmt |

**Patentansprüche**

1. Formmasse, die zu mindestens 50 Gew.-% eine teilkristalline Polyamidkomponente enthält und die Formmasse einen Füllstoff enthält, der der Formmasse Leitfähigkeit verleiht, dadurch charakterisiert, dass die Formmasse keinen Kristallitschmelzpunkt ($T_m$) unter 50°C aufweist, wobei die Polyamidkomponente die Komponenten A und B enthält,

   A PA Homopolymer des Typs PA X.Y oder PA Z , wobei X für einen Diaminrest (DA), Y für einen Dicarboxylrest (DC), und Z für einen alpha-omega-Aminosäurerest steht;
   B PA Copolymer, des Typs PA X'.Y' wobei X' für einen Diaminrest (DA') und Y' für einen Dicarboxylrest (DC') steht;

   wobei ein Teil der Diaminreste (DA') durch einen Polyether ersetzt ist, der mindestens zwei Aminotermini oder mindestens zwei Hydroxytermini aufweist;
   wobei der Anteil Polyether an der Summe der Komponenten A und B zwischen 0,5 bis 15 Gew.-% beträgt;
   wobei das PA Homopolymer bis zu 10 mol% aus anderen amidbildenden Bausteinen gebildet werden kann;
   wobei bis zu 10 mol% der Diaminreste (DA') durch einen Polyether ersetzt sein können, der nur einen Aminoterminus oder der nur einen Hydroxyterminus aufweist.

2. Formmasse nach Anspruch 1, wobei das PA-Copolymer der Komponente B einen Polyetheranteil von 8 bis 30 Gew.-% aufweist, bezogen auf die Gesamtmasse des PA-Copolymers.

3. Formmasse nach Ansprüchen 1 oder 2, wobei der Polyether ein zahlenmittleres Molekulargewicht $M_n$ von maximal 5000 g/mol aufweist.

**4.** Formmasse nach Ansprüchen 1 bis 3, wobei die Kettenlängen des PA Copolymers und des PA Homopolymers der Polyamidkomponente im Durchschnitt um nicht mehr als 10% in Bezug auf die Kohlenstoffatomzahl der amidbildenden Bausteine voneinander abweichen, wobei die Abweichung auf den höheren Wert der Kettenlängen bezogen wird.

**5.** Formmasse nach Ansprüchen 1 bis 4, wobei der Anteil an Füllstoff zur Erhöhung der Leitfähigkeit von 1 bis 10 Gew.-% beträgt, bezogen auf die Gesamtmasse aus Polyamidkomponente und Füllstoff zur Erhöhung der Leitfähigkeit.

**6.** Formmasse nach Ansprüchen 1 bis 5 dadurch charakterisiert, dass sie einen Kristallinitätsgrad aufweist, der niedriger ist, als der Kristallinitätsgrad einer Mischung, die die gleichen Komponenten A und Füllstoff zur Erhöhung der Leitfähigkeit in gleichen Mengen aufweist, wobei eventuelle weitere Bestandteile der Formmasse ebenfalls identisch in Identität und Menge sind.

**7.** Formmasse nach Ansprüchen 1 bis 6 dadurch charakterisiert, dass sie frei von Weichmachern sind.

**8.** Verwendung der Formmasse nach einem der Ansprüche 1 bis 7 zur Herstellung von Hohlprofilen.

**9.** Ein- oder mehrschichtige Hohlprofile, die mindestens eine Schicht aufweisen, die aus der Formmasse nach Ansprüchen 1 bis 7 besteht.

**10.** Ein- oder mehrschichtige Hohlprofile nach Anspruch 9, die mindestens eine Sperrschicht aufweisen.

**11.** Ein- oder mehrschichtige Hohlprofile nach Ansprüchen 9 oder 10, wobei Schichten, die im Hohlkörper auf der Innenseite der Sperrschicht angeordnet sind, frei von Weichmachern sind.

Europäisches Patentamt
European Patent Office
Office européen des brevets

# EUROPÄISCHER RECHERCHENBERICHT

**Nummer der Anmeldung**

EP 18 20 1485

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 893 689 A1 (ARKEMA FRANCE [FR]; CENTRE NAT RECH SCIENT [FR]) 5. März 2008 (2008-03-05) | 1-11 | INV. C08G69/14 C08G69/26 |
| Y | * Seite 1, Zeile 5 - Zeile 23; Ansprüche 1-13 * * Seite 11, Zeile 3 - Zeile 9 * * Seite 11, Zeile 12 - Zeile 29 * * Seite 12, Zeile 1 - Zeile 19 * * Seite 12, Zeile 31 - Seite 13, Zeile 19 * * Seite 14, Zeile 9 - Zeile 20 * * Seite 11, Zeile 3 - Zeile 9; Anspruch 13 * | 8-11 | C08G69/40 B32B1/08 B60K15/00 F02M37/00 C08K3/04 C08L77/02 |
| Y | ----- DE 10 2005 061530 A1 (EMS CHEMIE AG [CH]) 12. Juli 2007 (2007-07-12) | 8-11 | |
| A | * Absatz [0001]; Ansprüche 1-21; Abbildung 1 * * Absätze [0043], [0046] - [0050], [0052] - [0056] * | 1-7 | |
| Y,D | ----- EP 1 884 356 A1 (EMS PATENT AG [CH]) 6. Februar 2008 (2008-02-06) | 8-11 | |
| A | * Absatz [0001]; Ansprüche 1-32 * * Absatz [0063]; Tabelle 1 * * Absatz [0064] - Absatz [0066]; Tabellen 2-4 * * Absatz [0067] - Absatz [0071]; Tabellen 5, 6 * ----- | 1-7 | |

**RECHERCHIERTE SACHGEBIETE (IPC)**

C08G
B32B
B60K
F02M
C08K
C08L

Der vorliegende Recherchenbericht wurde für alle Patentansprüche erstellt

| Recherchenort | Abschlußdatum der Recherche | Prüfer |
|---|---|---|
| München | 15. März 2019 | Paulus, Florian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

EP 3 640 280 A1

**ANHANG ZUM EUROPÄISCHEN RECHERCHENBERICHT
ÜBER DIE EUROPÄISCHE PATENTANMELDUNG NR.**

EP 18 20 1485

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-03-2019

| Im Recherchenbericht angeführtes Patentdokument | Datum der Veröffentlichung | Mitglied(er) der Patentfamilie | Datum der Veröffentlichung |
|---|---|---|---|
| EP 1893689 A1 | 05-03-2008 | EP 1893689 A1<br>WO 2006136715 A1 | 05-03-2008<br>28-12-2006 |
| DE 102005061530 A1 | 12-07-2007 | KEINE | |
| EP 1884356 A1 | 06-02-2008 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1216826 A2
- US 6467508 B
- DE 3724997 C2
- DE 2716004 C3
- EP 0566755 B1
- EP 1884356 A
- EP 0459862 B1
- CH 642982
- WO 2017121961 A1

- WO 2017121962 A1
- EP 2635638 A1
- US 20130299750 A1
- US 5643502 A
- US 5424054 A
- EP 0683210 A2
- US 5874176 A
- US 5554425 A

**In der Beschreibung aufgeführte Nicht-Patentliteratur**

- Polyamid-Kunststoffhandbuch. Carl Hanser Verlag, 1998, vol. 3/4, 872

- **VAN KREVELEN.** *Properties of Polymers,* 2009